# EUROPÄISCHE PATENTSCHRIFT

(11) **EP 1 466 871 B1**
(45) Veröffentlichungstag und Bekanntmachung des Hinweises auf die Patenterteilung: **22.04.2009**
(21) Anmeldenummer: 04006619.3
(22) Anmeldetag: 19.03.2004
(51) Int. Cl.: C03B 9/40, C03B 9/41, C03B 9/193

(54) **Verfahren und Vorrichtung zum Antrieb eines Pressstempels einer Glasformmaschine**
Process and apparatus to drive the plunger of a glass forming machine
Procédé et dispositif de commande du poinçon ébaucheur d'ume machine à façonner le verre

(30) Priorität: 11.04.2003 DE 10316600
(43) Veröffentlichungstag der Anmeldung: 13.10.2004
(73) Patentinhaber: Heye International GmbH, 31683 Obernkirchen (DE)
(72) Erfinder: Hartmann, Thomas, 31675 Bückeburg (DE); Krumme, Manfred, 32457 Porta Westfalica (DE); Winkelhake, Dirk, 31688 Nienstädt (DE)
(74) Vertreter: Callies, Rainer Michael

(56) Entgegenhaltungen:
- EP-A- 0 327 240
- EP-A- 0 869 104
- EP-A- 1 127 853
- EP-B- 0 691 940
- US-A- 4 662 923

## Beschreibung

Die Erfindung betrifft ein Verfahren gemäß dem Oberbegriff des Anspuchs 1.

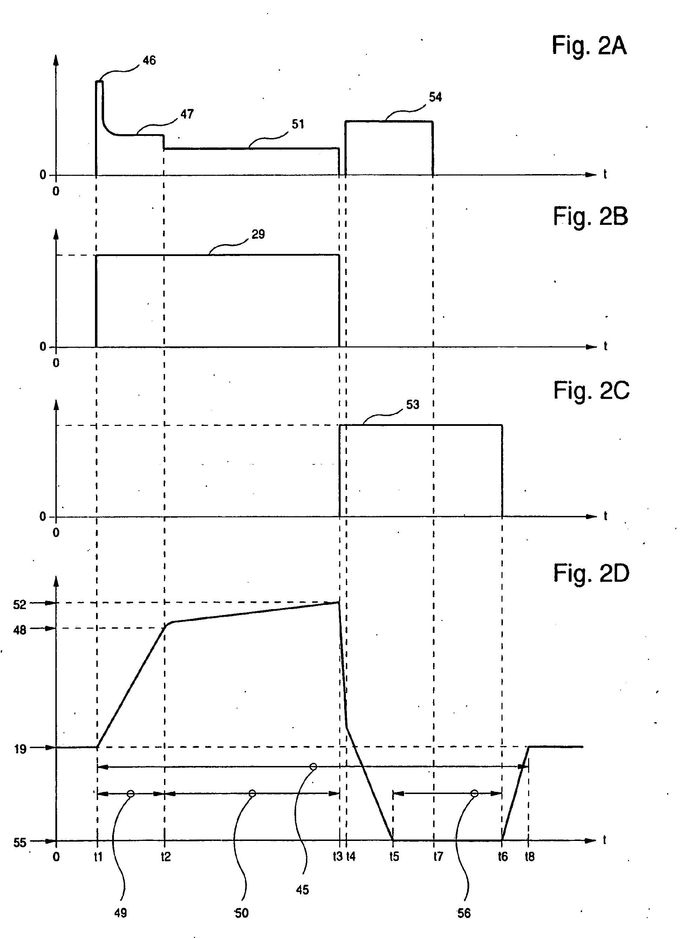

Bei einem bekannten Verfahren dieser Art (EP 0 802 167 A2) ist die elektronische Steuereinheit einerseits mit einer 24V-Energieversorgung, andererseits mit einem Produktionslinien-Steuerpult und schließlich mit einem Sollwertgeber für den Druckmediumdruck für den Vorschubraum verbunden. Nach dem anfänglichen kurzen Druckstoß von z.B. 4 ms mit einem verhältnismäßig hohen ersten Druck von z.B. 2 bar (Fig. 2) in den Vorschubraum wird der Vorschubraum z.B. 70 ms lang mit einem niedrigeren, nach einem Einschwingvorgang konstanten (Spalte 5, Zeile 15) Druck von z.B. 1,2 bar beaufschlagt. Im Anschluss daran wird der Vorschubraum entlüftet (s. auch Spalte 4, Zeile 51, bis Spalte 5, Zeile 13). Eine Regelung findet weder hinsichtlich des Drucks noch hinsichtlich der Pressstempelstellung statt (Spalte 6, Zeile 13 bis 18). Der Druckverlauf im Vorschubraum ist verfahrenstechnisch ungünstig.

Aus der EP 0 691 940 B1 (siehe auch die EP 0 802 167 A2, Spalte 2, Zeilen 33 bis 48) ist es an sich bekannt, dem Proportionalventil ein Signal durch einen Mikrokontroller zuzuleiten. Der Mikrokontroller bestimmt die Größe des Signals durch einen Algorithmus in Abhängigkeit von Rückführungssignalen aus einem Pressstempelstellungssensor und aus je einem mit dem Vorschubraum und dem Rückzugsraum verbundenen Drucksensor. Es handelt sich also um eine Druckregelung im geschlossenen Kreis, die ziemlich komplex und teuer ist.

Aus der EP 1 002 960 A2 ist es an sich bekannt, den Druck im Vorschubraum während der Pressdauer über ein Druckregelventil zu regeln.

Pressstempelstellungssensoren sind aus der US 4 613 352 A und der EP 0 652 854 B1 an sich bekannt.

Aus der US 5 236 485 A ist es an sich bekannt, einen Presstempel durch eine hydraulische Kolben-Zylinder-Einheit anzutreiben. Dazu ist ein elektro-hydraulisches 4Wege/3Stellungsventil über Leitungen einerseits mit dem Vorschubraum und andererseits mit dem Rückzugsraum der Kolben-Zylinder-Einheit verbunden. An diese Leitungen sind elektro-hydraulische analoge Drucksensoren angeschlossen. Die beiden Drucksensoren und ein Pressstempelstellungssensor sind mit einem Mikroprozessor verbunden, der das Wegeventil steuert. Auch diese Lösung ist aufwendig. Sie ist nur für Hydraulikflüssigkeit als Druckmedium geeignet und deshalb brandgefährdet. Auch aus der US 4 662 923 A sowie der EP 0 327 240 A1 ist eine hydraulische Kolben-Zylinder-Einheit mit dem Nachteil der Brandgefahr an sich bekannt.

Aus der EP 1 127 853 A2 ist an sich bekannt, sowohl den Vorschubraum als auch den Rückzugsraum der den Pressstempel bewegenden pneumatischen Kolben-Zylinder-Einheit über jeweils ein Durchfluss- oder Drucksteuerventil mit einer gemeinsamen Druckluftquelle zu verbinden. Jedes Ventil wird durch eine gemeinsame Steuereinheit mittels eines in einem gesonderten zugehörigen Speicher abgelegten Programms gesteuert. Dieses Programm wird durch Tests empirisch ermittelt (s. Absatz [0022]). Es handelt sich um eine Steuerung unter bewusstem Verzicht auf Regelmöglichkeiten (s. Abs. [0035] und [0036]). Damit lässt sich der Pressvorgang nicht mit der insbesondere für das Enghals-Press-Blasen von Hohlglasgegenständen erforderlichen Genauigkeit kontrollieren.

Die EP 0 869 104 A1 beschreibt pneumatisch betätigte Mechanismen für eine Glasformmaschine. Der jeweilige Mechanismus weist eine Kolben-Zylinder-Einheit auf, wobei die Bewegung des Kolbens geregelt gesteuert wird.

Der Erfindung liegt die Aufgabe zugrunde, den Wärmeentzug aus dem Külbel während des Presszyklus zu optimieren und ein Auseinanderdrücken der Vorformhälften während des Pressens weitestgehend zu verhindern.

Diese Aufgabe ist durch die Merkmale des Anspruchs 1 gelöst. Als Druckmedium kommt vorzugsweise Druckgas und insbesondere Druckluft in Betracht. Vor allem beim Enghals-Press-Blasen von Hohlglasgegenständen kommt der exakten und reproduzierbaren Einstellung des Pressdrucks große Bedeutung zu. Zu geringer Pressdruck bewirkt z.B., dass, auf dem Zeitstrahl betrachtet, der Pressstempel zu spät die Pressposition erreicht und dadurch dem Külbel zu wenig Wärmeenergie entzogen wird. Zu hoher Pressdruck kann zu zu großem Wärmeentzug aus dem Külbel und/oder zum Auseinanderdrücken der Vorformhälten führen. Der Wärmeentzug wird im Wesentlichen durch die Prozessparameter Temperaturdifferenz zwischen dem Külbel und der Vorform, Anpresskraft des Külbels in die Innenkontur der Vorform und des Pressstempels an das Külbel und die Pressdauer bestimmt. Durch die erfindungsgemäße Regelung des zweiten Drucks lässt sich die Pressdauer in wünschenswerter Weise konstant halten. So ist insgesamt ein kontrollierter Wärmeübergang von dem Külbel an den Pressstempel und die Vorform gewährleistet. Gleichzeitig wird durch Einstellung eines geeigneten Pressdrucks während der Pressdauer weitestgehend verhindert, dass die Vorformhälften durch das Pressen auseinandergedrückt werden.

Alternativ könnte mit gleichem Erfolg der Abluftstrom geregelt werden.

Gemäß Anspruch 2 führt das Pressstempel-Stellungssignal zu einer Veränderung des Druckverlaufs des zweiten Drucks über der Zeit und/oder über dem Weg.

Gemäß Anspruch 3 oder 4 lässt sich der dritte Druck je nach Bedarf relativ zu dem zweiten Druck wählen.

Die Merkmale des Anspruchs 5 ermöglichen ein ungestörtes Invertieren des Külbels. Bei diesem Invertieren wird das in der Mündungsform gehaltene Külbel aus der geöffneten Vorform in eine Fertigformstation der Glasformmaschine geschwenkt. In der Fertigformstation wird die Mündungsform geöffnet und das Külbel in die Fertigform übergeben. Sodann wird die Mündungsform wieder geschlossen und in ihre Ausgangsstellung in der Vorformstation zurückgeschwenkt. Dieses Invertieren ist insbesondere bei I.S. (Individual Section) - Glasformmaschinen an sich bekannt und braucht hier nicht näher erläutert zu werden.

Die Merkmale des Anspruchs 6 dienen der Vereinfachung und besseren Kontrolle der Rückzugsbewegung.

Gemäß Anspruch 7 wird der Gegendruck von einer solchen Größe gewählt, dass sich eine resultierende Rückzugskraft ergibt. Der Gegendruck wirkt dämpfend und verhindert übermäßige mechanische Beanspruchung der Kolben-Zylinder-Einheit.

Durch die Merkmale des Anspruchs 8 ist auf einfache Weise die Rückkehr des Pressstempels in seine Ladestellung bewerkstelligt.

Diese und weitere Merkmale und Vorteile der Erfindung werden nachfolgend anhand der in den Zeichnungen dargestellten Ausführungsbeispiele näher erläutert. Es zeigt
Fig. 1 einen Längsschnitt durch einen Pressstempelmechanismus mit geschlossener Vorform und zugehörigem Blockschaltbild,
Fig. 2A bis 2D Kurvenverläufe wichtiger Parameter über der Zeitachse und
Fig. 3 eine andere Ausführungsform des Proportionalsventils.

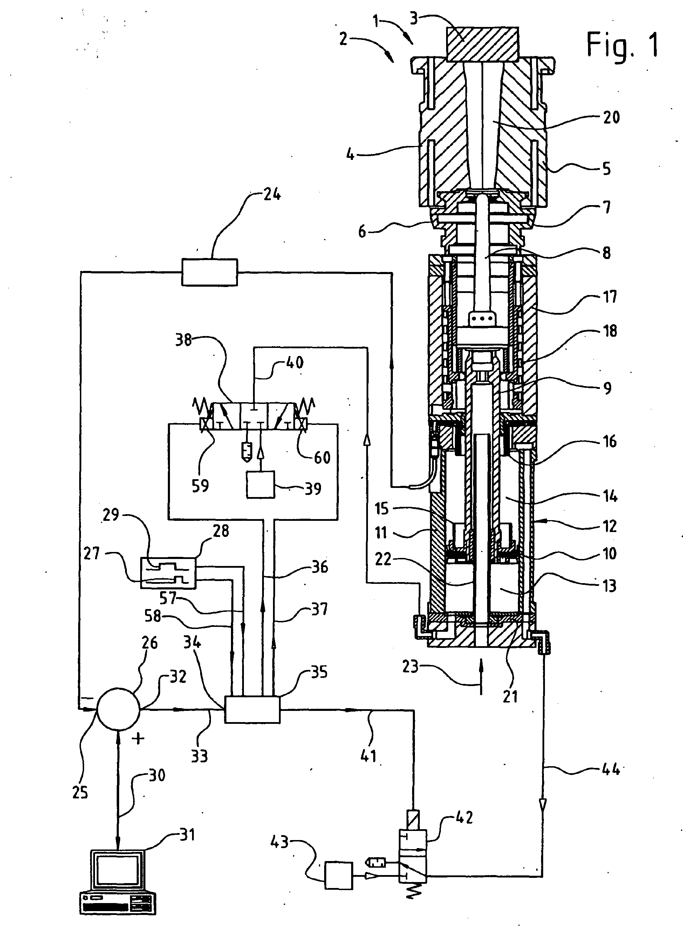

Fig. 1. zeigt eine Vorformstation 1 einer Glasformmaschine 2, bei der es sich z.B. um eine Sektion einer I.S.-Glasformmaschine handeln kann. Die Vorformstation 1 weist einen Vorformboden 3, Vorformhälften 4 und 5, Mündungswerkzeughälften 6 und 7 und einen Pressstempel 8 auf. Der Pressstempel 8 ist in an sich bekannter Weise am oberen Ende einer Kolbenstange 9 eines Kolbens 10 befestigt. Der Kolben 10 ist in einem Zylinder 11 einer Kolben-Zylinder-Einheit 12 verschiebbar. Unterhalb des Kolbens 10 befindet sich ein Vorschubraum 13 und oberhalb des Kolbens 10 ein Rückzugsraum 14. Der Kolben 10 trägt einen Betätigungsring 15 für einen Pressstempelstellungssensor 16, der in diesem Fall gemäß der EP 0 652 854 B1 ausgebildet ist.

Der Pressstempel 8 wird durch einen zu dem Zylinder 11 koaxialen Führungszylinder 17 geführt. In dem Führungszylinder 17 ist außerdem eine Feder 18 angeordnet, die bei entlüftetem Vorschubraum 13 und entlüftetem Rückzugsraum 14 den Pressstempel 8 in seine in Fig. 1 gezeigte axiale Ladestellung 19 (Fig. 2D) bewegt. In dieser Ladestellung 19 taucht eine obere Spitze des Pressstempels 8 gerade in einen Mündungsbereich einer Vorformausnehmung 20 ein. In der Ladestellung 19 ist zunächst der Vorformboden 3 entfernt, so dass von oben her ein Glastropfen in die Vorformausnehmung 20 und auf die Spitze des Pressstempels 8 fallen kann.

Die Kolbenstange 9 ist hohl ausgebildet und nimmt ein an einem Boden 21 des Zylinders 11 befestigtes Kühlluftrohr 22 auf. Dem Kühlluftrohr 22 wird Kühlluft für den Pressstempel 8 in Richtung eines Pfeils 23 zugeführt.

Der Pressstempelstellungssensor 16 ist über eine Signalverstärker/Signalauswerteeinheit 24 mit einem Signaleingang 25 einer Regelschaltung 26 verbunden. Die Regelschaltung 26 ist ferner über eine Leitung 30 bidirektional mit einer Eingabe/Ausgabeeinheit 31 verbunden. Ein Signalausgang 32 der Regelschaltung 26 ist über eine Leitung 33 mit einem Eingang 34 einer elektronischen Steuereinheit 35 verbunden. Der elektronischen Steuereinheit 35 sind aus einer Zeitablaufsteuerung 28 über eine Leitung 57 ein Pressstempel-Vorschubsignal 29 sowie über eine Leitung 58 ein Pressstempel-Rückzugssignal 27 zuführbar.

Die elektronische Steuereinheit 35 steuert über Steuerleitungen 36 und 37 Elektromagneten 59 und 60 eines Proportionalventils 38, das als 3Wege/3Stellungsventil ausgebildet ist. Das Proportionalventil 38 ist zwischen eine erste Druckmediumquelle 39 und eine Leitung 40 zum Vorschubraum 13 eingeschaltet.

Eine weitere Steuerleitung 41 der elektronischen Steuereinheit 35 führt zu einem 3Wege/2Stellungsventil 42, das zwischen ein zweite Druckmediumquelle 43 und eine Leitung 44 zum Rückzugsraum 14 eingeschaltet ist.

Nachfolgend wird die Funktion anhand der Kurvenverläufe in den Fig. 2A bis 2D näher erläutert.

Zunächst war das Proportionalventil 38 (Fig.1) nach links durchgeschaltet und dadurch der Vorschubraum 13 entlüftet worden. Da sich auch das Wegeventil 42 in seiner nach oben durchgeschalteten Entlüftungsstellung befindet, ist auch der Rückzugsraum 14 entlüftet. Das hat zur Folge, dass sich der Pressstempel 8 unter dem Einfluss der Feder 18 in seine in Fig. 1 gezeichnete Ladestellung 19 (Fig. 2D) einstellen konnte. In dieser Ladestellung 19 wird, wie schon angedeutet, ein Glastropfen in die Vorformausnehmung 20 eingebracht und der Vorformboden 3 aufgesetzt.

In Fig. 2A ist über der Zeit der Sollwert des Drucks im Vorschubraum 13 aufgetragen.

Fig. 2B zeigt das aus der Zeitablaufsteuerung 28 zur Verfügung gestellte Pressstempel-Vorschubsignal 29 über der Zeit.

Fig. 2C zeigt den Druckverlauf im Rückzugsraum 14 über der Zeit.

Fig. 2D schließlich gibt die axiale Position des Pressstempels 8 über der Zeit wieder.

In Fig. 2D ist von einem Startzeitpunkt t1 bis zu einem Zeitpunkt t8 ein Presszyklus 45 eingetragen. Zum Startzeitpunkt t1 wird das Pressstempel-Vorschubsignal 29 durch die Zeitablaufsteuerung 28 in die elektronische Steuereinheit 35 eingegeben, die ihrerseits das Proportionalventil 38 in Fig. 1 nach rechts durchschaltet. In dieser Schaltstellung wird die erste Druckmediumquelle 39 mit dem Vorschubraum 13 verbunden. Das Proportionalventil 38 leitet dabei Druckmedium, insbesondere Druckluft, entsprechend den Sollwertvorgaben gemäß Fig. 2A in den Vorschubraum 13 ein.

So wird zu dem Startzeitpunkt t1 zunächst kurzzeitig Druckmedium mit einem verhältnismäßig hohen ersten Druck 46 in den Vorschubraum 13 eingeleitet, um die anfängliche Reibung zu überwinden und den Pressstempel 8 zu beschleunigen. Im Anschluss daran leitet das Proportionalventil 38 Druckmedium mit einem niedrigeren zweiten Druck 47 in den Vorschubraum 13 ein. Die Höhe des zweiten Drucks 47 wird so geregelt, dass der Pressstempel 8 zu einem festgelegten Pressbeginn t2 eine Pressanfangsstellung 48 erreicht. In dieser Pressanfangsstellung hat der Pressstempel 8 die Vorformausnehmung 20 vollständig mit schmelzflüssigem Glas gefüllt. Das Erreichen dieser Pressanfangsstellung 48 wird durch den Pressstempelstellungssensor 16 festgestellt und über die Signalverstärker/Signalauswerteeinheit 24 der Regelschaltung 26 mitgeteilt. Ein Beispiel für die Einheit 24 zeigt Fig. 4 der US 4 613 352 A. In Fig. 2D ist von t1 bis t2 eine Vorschubdauer 49 für den Pressstempel 8 eingetragen.

Zur Optimierung des Pressprozesses wird erfindungsgemäß eine von dem Pressbeginn t2 bis zu einem Pressende t3 eingetragene Pressdauer 50 konstant gehalten. Während dieser Pressdauer 50 steht in dem Vorschubraum 13 ein dritter Druck 51 an, der gemäß Fig. 2A niedriger als der zweite Druck 47 gewählt ist, aber auch größer als der zweite Druck 47 sein kann. Während der Pressdauer 50 bewegt sich der Pressstempel 8 noch geringfügig von der Pressanfangsstellung 48 bis in eine Pressendstellung 52, die er am Pressende t3 erreicht.

Am Pressende t3 endet das Pressstempel-Vorschubsignal 29 und wird das Proportionalventil 38 ganz nach links durchgeschaltet. Dadurch wird der Vorschubraum 13 entlüftet. Gleichzeitig wird das Wegeventil 42 nach unten hin durchgeschaltet und dadurch die zweite Druckmediumquelle 43, insbesondere eine Druckluftquelle, mit dem Rückzugsraum 14 verbunden. Dadurch baut sich gemäß Fig. 2C ein vierter Druck 53 in dem Rückzugsraum 14 auf und zieht den Pressstempel 8 bis zu einem Zeitpunkt t4 verhältnismäßig schnell zurück.

In diesem Zeitpunkt t4 wird gemäß Fig. 2A durch das Proportionalventil 38, das dazu wieder nach rechts durchgeschaltet wurde, ein Gegendruck 54 in den Vorschubraum 13 eingeleitet. Die Größe dieses Gegendrucks 54 wird so gewählt, dass sich eine erwünschte Verlangsamung der Rückzugsbewegung des Pressstempels 8 bis zu einem Zeitpunkt t5 ergibt. Im Zeitpunkt t5 erreicht der Pressstempel 8 eine Umkehrstellung 55 (Fig. 2D), in der er bis zu einem Zeitpunkt t6 während einer Umkehrdauer 56 verbleibt. Wie schon erwähnt, wird während der Umkehrdauer 56 das Mündungswerkzeug 6, 7 mit dem Külbel aus der Vorformstation in eine nicht gezeichnete Fertigformstation hinübergeschwenkt. In der Fertigformstation wird das Külbel an eine Fertigform abgegeben. Das Mündungswerkzeug wird sodann während der Umkehrdauer 56 aus der Fertigformstation in die Vorformstation 1 zurückgeschwenkt. Im Zeitpunkt t6 wird der vierte Druck 53 durch Umschaltung des Wegeventils 42 aus dem Rückzugsraum 14 entlüftet. Dies führt dazu, dass, da sich zu diesem Zeitpunkt das Proportionalventil 38 ebenfalls in seiner nach links durchgeschalteten Entlüftungsstellung befindet, der Pressstempel 8 unter der Wirkung der Feder 18 bis zu dem Zeitpunkt t8 sich wieder in seine Ladestellung 19 (Fig. 2D) zurückbewegt. Damit ist das Ende des Presszyklus 45 erreicht und kann ein neuer Presszyklus 45 beginnen.

Der Gegendruck 54 kann schon vor dem Zeitpunkt t6 zu einem Zeitpunkt t7 beendet werden, sobald der Pressstempel 8 in seiner Umkehrstellung 55 zur Ruhe gekommen ist.

In allen Zeichnungsfiguren sind gleiche Teile mit gleichen Bezugszahlen versehen.

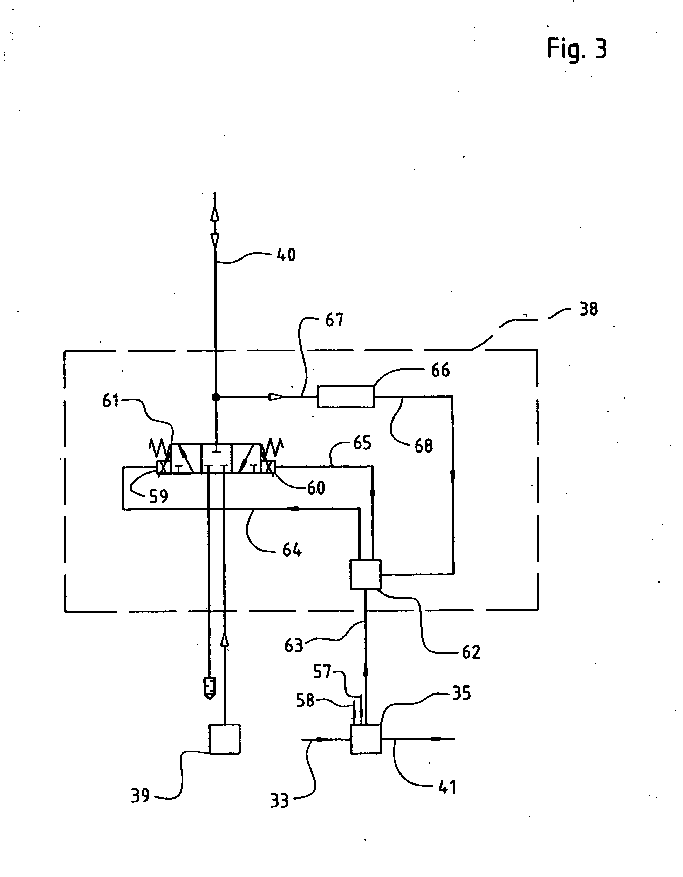

Fig. 3 zeigt eine andere Ausführungsform des Proportionalventils 38, das aufweist: Ein durch die Elektromagnete 59 und 60 in beide Schaltrichtungen betätigbares Wegeventil 61, eine Ventiltreiberelektronik 62, die einerseits über eine Steuerleitung 63 mit der Steuereinheit 35 und andererseits über je eine Steuerleitung 64 und 65 mit den Elektromagneten 59, 60 verbunden ist, und einen Drucksensor 66, der einerseits über eine Stichleitung 67 mit der das Wegeventil 61 mit dem Vorschubraum 13 verbindenden Leitung 40 und andererseits über eine Signalleitung 68 mit der Ventiltreiberelektronik 62 verbunden ist.

## Patentansprüche

1. Verfahren zum Antrieb eines Pressstempels (8) für eine Vorform (3 bis 7) einer Glasformmaschine (2) durch eine Kolben-Zylinder-Einheit (12) mit einem Vorschubraum (13) auf einer Seite eines Kolbens (10) und einem Rückzugsraum (14) auf der gegenüberliegenden Seite des Kolbens (10),
wobei der Vorschubraum (13) über ein durch eine elektronische Steuereinheit (35) ansteuerbares Proportionalventil (38) mit einer ersten Druckmediumquelle (39) verbindbar ist,
mit folgenden Schritten:
(a) Zu einem Startzeitpunkt (t1) eines Presszyklus (45) wird durch das Proportionalventil (38) kurzzeitig Druckmedium mit einem verhältnismäßig hohen ersten Druck (46) in den Vorschubraum (13) geleitet, und
(b) im Anschluss an Schritt (a) leitet das Proportionalventil (38) bis zu einem Pressende (t3) des Presszyklus (45) Druckmedium mit einem niedrigeren Druck (47,51) in den Vorschubraum (13),
**gekennzeichnet durch** folgende Schritte:
(A) Zum Startzeitpunkt (t1) befindet der Pressstempel (8) sich in einer Ladestellung (19), in welcher ein Glastropfen in die Vorform (4 bis 7) eingebracht wurde,
(B) im Anschluss an den verhältnismäßig hohen ersten Druck (46) gemäß Schritt (a) wird **durch** das Proportionalventil (38) Druckmedium mit einem derart geregelten zweiten Druck (47) des niedrigeren Drucks (47,51) in den Vorschubraum (13) geleitet, dass bei einem festgelegten Pressbeginn (t2), bei dem der Pressstempel (8) eine Formausnehmung (20) der Vorform (3 bis 7) vollständig mit schmelzflüssigem Glas gefüllt hat, der Pressstempel (8) eine Pressanfangsstellung (48) erreicht,
(C) während einer konstanten Pressdauer (50) vom Pressbeginn (t2) bis zum Pressende (t3), bei dem der Pressstempel (8) seine größte Eindringtiefe in die Vorform (3 bis 7) erreicht, wird **durch** das Proportionalventil (38) Druckmedium mit einem konstanten dritten Druck (51) des niedrigeren Drucks (47,51) in den Vorschubraum (13) geleitet, und
(D) vom Startzeitpunkt (t1) bis zum Pressende (t3) wird der Rückzugsraum (14) drucklos geschaltet.

2. Verfahren nach Anspruch 1,
**dadurch gekennzeichnet, dass** die axiale Stellung des Pressstempels (8) abgetastet (15,16) und ein entsprechendes elektrisches Stellungssignal gewonnen wird,
und dass das Stellungssignal zur Regelung des zweiten Drucks (47) herangezogen wird.

3. Verfahren nach Anspruch 1 oder 2,
**dadurch gekennzeichnet, dass** der dritte Druck (51) höher als der zweite Druck (47) gewählt wird.

4. Verfahren nach Anspruch 1 oder 2,
**dadurch gekennzeichnet, dass** der dritte Druck (51) niedriger als der zweite Druck (47) gewählt wird.

5. Verfahren nach einem der Ansprüche 1 bis 4,
**dadurch gekennzeichnet, dass** am Pressende (t3) der Vorschubraum (13) drucklos geschaltet und der Rückzugsraum (14) mit Druckmedium mit einem vierten Druck (53) beaufschlagt wird,
und dass der vierte Druck (53) aufrechterhalten wird, bis der Pressstempel (8) sich zunächst über die Ladestellung (19) hinaus in eine Umkehrstellung (55) zurückbewegt hat und anschließend während einer Umkehrdauer (56) in der Umkehrstellung (55) verblieben ist.

6. Verfahren nach Anspruch 5,
**dadurch gekennzeichnet, dass** der vierte Druck (53) konstant gehalten wird.

7. Verfahren nach Anspruch 5 oder 6,
**dadurch gekennzeichnet, dass** vor dem Zeitpunkt (t5), zu dem der Pressstempel (8) seine Umkehrstellung (55) erreicht, durch das Proportionalventil (38) Druckmedium mit einem Gegendruck (54) in den Vorschubraum (13) geleitet wird,
und dass der Gegendruck (54) bis zu einem Zeitpunkt (t7) aufrechterhalten wird, zu dem der Pressstempel (8) in seiner Umkehrstellung (55) zur Ruhe gekommen ist.

8. Verfahren nach einem der Ansprüche 5 bis 7,
**dadurch gekennzeichnet, dass** am Ende (t6) der Umkehrdauer (56) der Rückzugsraum (14) drucklos geschaltet wird, so dass der Pressstempel (8) unter der Wirkung einer Feder (18) aus seiner Umkehrstellung (55) in seine Ladestellung (19) zurückkehren und damit den Presszyklus (45) beenden kann.

## Claims

1. Method for driving a pressing plunger (8) for a parison mould (3 to 7) of a glass forming machine (2) by means of a piston-cylinder unit (12) having a feed chamber (13) on one side of a piston (10) and a return chamber (14) on the opposite side of the piston (10),
wherein the feed chamber (13) can be connected to a first source (39) of pressure medium via a proportional valve (38) which can be controlled by an electronic control unit (35),
having the following steps:
(a) at a starting point (t1) of a pressing cycle (45), pressure medium having a relatively high first pressure (46) is fed into the feed chamber (13) for a short period of time through the proportional valve (38), and
(b) following step (a), the proportional valve (38) feeds pressure medium having a lower pressure (47, 51) into the feed chamber (13) until the end of pressing (t3) of the pressing cycle (45),
**characterised by** the following steps:
(A) at the starting point (t1) the pressing plunger (8) is in a loading position (19) in which a glass gob has been introduced into the parison mould (4 to 7),
(B) following the relatively high first pressure (46) of step (a), pressure medium having a second pressure (47) of the lower pressure (47, 51) is fed into the feed chamber (13) through the proportional valve (38), which second pressure is controlled in such a manner that at a fixed start of pressing (t2), at which point in time the pressing plunger (8) has completely filled a mould recess (20) of the parison mould (3 to 7) with molten glass, the pressing plunger (8) reaches a pressing start position (48),
(C) during a constant pressing period (50) from the start of pressing (t2) to the end of pressing (t3), at which point in time the pressing plunger (8) reaches its maximum depth of penetration into the parison mould (3 to 7), pressure medium having a constant third pressure (51) of the lower pressure (47, 51) is fed into the feed chamber (13) through the proportional valve (38), and
(D) from the starting point (t1) to the end of pressing (t3), the return chamber (14) is connected under no pressure.

2. Method as claimed in Claim 1,
**characterised in that** the axial position of the pressing plunger (8) is scanned (15, 16) and a corresponding electrical positional signal is obtained,
and **in that** the positional signal is used to control the second pressure (47).

3. Method as claimed in Claim 1 or 2,
**characterised in that** the third pressure (51) is selected so as to be higher than the second pressure (47).

4. Method as claimed in Claim 1 or 2,
**characterised in that** the third pressure (51) is selected so as to be lower than the second pressure (47).

5. Method as claimed in any one of Claims 1 to 4,
**characterised in that** at the end of pressing (t3) the feed chamber (13) is connected under no pressure and the return chamber (14) is influenced by pressure medium having a fourth pressure (53),
and **in that** the fourth pressure (53) is maintained until the pressing plunger (8) has firstly moved back beyond the loading position (19) into a reversal position (55) and then has remained in the reversal position (55) during a reversal period (56).

6. Method as claimed in Claim 5,
**characterised in that** the fourth pressure (53) is kept constant.

7. Method as claimed in Claim 5 or 6,
**characterised in that** prior to the point in time (t5) at which the pressing plunger (8) reaches its reversal position (55), pressure medium having a counter-pressure (54) is fed into the feed chamber (13) through the proportional valve (38),
and **in that** the counter-pressure (54) is maintained until a point in time (t7) at which the pressing plunger (8) has come to rest in its reversal position (55).

8. Method as claimed in any one of Claims 5 to 7,
**characterised in that** at the end (t6) of the reversal period (56) the return chamber (14) is connected under no pressure so that the pressing plunger (8) can return from its reversal position (55) to its loading position (19) under the action of a spring (18) and can thus terminate the pressing cycle (45).

## Revendications

1. Procédé d'entraînement d'un poinçon-ébaucheur (8) pour un moule ébaucheur (3 à 7) d'une machine à mouler le verre (2) par une unité piston-cylindre (12) avec une chambre d'avance (13) sur un côté du piston (10) et une chambre de retrait (14) sur le côté opposé du piston (10),
la chambre d'avance (13) pouvant être reliée à une première source de fluide sous pression (39) au moyen d'une vanne proportionnelle (38) commandable par une unité de commande électronique (35), avec les étapes suivantes :
(a) à un moment de démarrage (t1) d'un cycle de moulage (45), du fluide sous pression est temporairement conduit par la vanne proportionnelle (38) dans la chambre d'avance (13) avec une première pression (46) relativement élevée, et
(b) suite à l'étape (a), la vanne proportionnelle (38) conduit du fluide sous pression avec une basse pression (47, 51) dans la chambre d'avance (13) jusqu'à une fin (t3) du cycle de moulage (45),
**caractérisé par** les étapes suivantes :
(A) au moment de démarrage (t1), le poinçon-ébaucheur (8) se trouve dans une position de chargement (19) dans laquelle une goutte de verre a été amenée dans le moule ébaucheur (4 à 7),
(B) succédant à la première pression (46) relativement élevée de l'étape (a), du fluide sous pression est conduit par la vanne proportionnelle (38) dans la chambre d'avance (13) avec une deuxième pression (47) de la basse pression (47, 51) réglée de telle manière que, lors d'un début de moulage (t2) défini, où le poinçon-ébaucheur (8) a entièrement rempli de verre en fusion une cavité (20) du moule ébaucheur (3 à 7), le poinçon-ébaucheur (8) atteint une position de commencement de moulage (48),
(C) pendant une durée de moulage (50) constante du début du moulage (t2) à la fin du moulage (t3), où le poinçon-ébaucheur (8) atteint sa profondeur de pénétration maximale dans le moule ébaucheur (3 à 7), du fluide sous pression est conduit par la vanne proportionnelle (38) dans la chambre d'avance (13) avec une troisième pression (51) constante de la basse pression (47, 51), et
(D) la pression est coupée dans la chambre de retrait (14) du moment de démarrage (t1) à la fin du moulage (t3).

2. Procédé selon la revendication 1, **caractérisé en ce que** la position axiale du poinçon-ébaucheur (8) est balayée (15, 16), et un signal électrique de position correspondant obtenu, et **en ce que** le signal de position est exploité pour le réglage de la deuxième pression (47).

3. Procédé selon la revendication 1 ou la revendication 2, **caractérisé en ce que** la troisième pression (51) est choisie supérieure à la deuxième pression (47).

4. Procédé selon la revendication 1 ou la revendication 2, **caractérisé en ce que** la troisième pression (51) est choisie inférieure à la deuxième pression (47).

5. Procédé selon l'une des revendications 1 à 4, **caractérisé en ce que** la pression est coupée dans la chambre d'avance (13) à la fin du moulage (t3), et la chambre de retrait (14) avec du fluide sous pression soumis à une quatrième pression (53), et **en ce que** la quatrième pression (53) est maintenue jusqu'à ce que le poinçon-ébaucheur (8) soit d'abord retourné vers une position d'inversion (55) au-delà de la position de chargement (19) avant de rester en position d'inversion (55) pendant une durée d'inversion (56).

6. Procédé selon la revendication 5, **caractérisé en ce que** la quatrième pression (53) est maintenue constante.

7. Procédé selon la revendication 5 ou la revendication 6, **caractérisé en ce qu'**avant le moment (t5) où le poinçon-ébaucheur (8) atteint sa position d'inversion (55), du fluide sous pression est conduit avec une contre-pression (54) dans la chambre d'avance (13) par la vanne proportionnelle (38), et **en ce que** la contre-pression (54) est maintenue jusqu'à un moment (t7) où le poinçon-ébaucheur (8) parvient au repos dans sa position d'inversion (55).

8. Procédé selon l'une des revendications 5 à 7, **caractérisé en ce qu'**à la fin (t6) de la durée d'inversion (56), la pression est coupée dans la chambre de retrait (14), de telle manière que le poinçon-ébaucheur (8) retourne sous l'action d'un ressort (18) de sa position d'inversion (55) vers sa position de chargement (19), et puisse ainsi terminer le cycle de moulage (45).
